Europäisches Patentamt

European Patent Office

Office européen des brevets

(11) Veröffentlichungsnummer: **0 415 224 A2**

# (12) EUROPÄISCHE PATENTANMELDUNG

(21) Anmeldenummer: 90115915.2

(51) Int. Cl.5: **H04B 10/12**

(22) Anmeldetag: **20.08.90**

(30) Priorität: **28.08.89 DE 3928403**

(43) Veröffentlichungstag der Anmeldung:
**06.03.91 Patentblatt 91/10**

(84) Benannte Vertragsstaaten:
**DE FR GB IT NL**

(71) Anmelder: **Siemens Aktiengesellschaft**
**Wittelsbacherplatz 2**
**W-8000 München 2(DE)**

(72) Erfinder: **Ebberg, Alfred, Dr.**
**Niemöllerallee 18**
**W-8000 München 83(DE)**

(54) Anordnung zum Erzeugen eines zwei zueinander orthogonale Polarisationszustände aufweisenden FSK-modulierten optischen Signals aus einem FSK-modulierten optischen Sendesignal.

(57)
2.1 Es soll eine kompakte Anordnung der genannten Art angegeben werden, die nur einen Polarisationsstrahlteiler benötigt und in einem kompakten Aufbau herstellbar ist.

2.2 Die Anordnung besteht dazu aus einem Polarisationsstrahlteiler (PBS), der aus dem polarisierten Sendesignal (S(t)) zwei Signalkomponenten (S1, S2) mit zueinander orthogonalen Polarisationszuständen (s, p) erzeugt, die durch zugeordnete Reflektoren (SP1, SP2) in sich zurückreflektiert und einander überlagert werden, wobei vor der Überlagerung der Polarisationszustand jeder Signalkomponente (S1, S2) in einen dazu orthogonalen Polarisationszustand umgewandelt wird, und wobei sich die optischen Weglängen zwischen dem Polarisationsstrahlteiler (PBS) und den Reflektoren (SP1, SP2) um einen bestimmten Betrag unterscheiden.

2.3 Anwendung bei optischem Überlagerungsempfang, insbesondere Heterodynempfang

FIG 1

## ANORDNUNG ZUM ERZEUGEN EINES ZWEI ZUEINANDER ORTHOGONALE POLARISATIONSZUSTÄNDE AUFWEISENDEN FSK-MODULIERTEN OPTISCHEN SIGNALS AUS EINEM FSK-MODULIERTEN OPTISCHEN SENDESIGNAL

Die Erfindung betrifft eine Anordnung zum Erzeugen eines zwei zueinander orthogonale Polarisationszustände aufweisenden FSK-modulierten optischen Signals aus einem FSK-modulierten optischen Sendesignal nach dem Oberbegriff des Patentanspruchs 1.

In einem optischen Übertragungssystem mit Überlagerungsempfang muß das Lokaloszillatorsignal denselben Polarisationszustand wie das empfangene Sendesignal aufweisen, um eine maximale Signalamplitude des Zwischenfrequenzsignals zu erhalten. Da die Doppelbrechung einer konventionellen Monomodefaser durch thermische sowie durch mechanische Störungen beeinflußt wird, weist der Polarisationszustand des empfangenen Sendesignals Schwankungen auf, was zu einer Amplitudenschwankung des Zwischenfrequenzsignals führt. Für den Fall, daß das Lokaloszillatorsignal und das Empfangssignal orthogonal zueinander polarisiert sind, verschwindet das Zwischenfrequenzsignal vollständig.

Polarisationsunabhängiger Empfang ist möglich, wenn das dem Empfänger zugeführte optische Signal zueinander orthogonale Polarisationszustände aufweist. Ein derartiges Signal kann aus dem Sendesignal, z.B. durch einen von dem zu übertragenden Datensignal angesteuerten Polarisationsumschalter, erzeugt werden (siehe dazu deutsche Patentanmeldung P 38 33 273.6 (= GR 88 P 1699 DE) oder deutsche Patentanmeldung P 38 33 274.4 (= GR 88 P 1698 DE)).

Ein derartiges Verfahren ist für alle bekannten digitalen Modulationsverfahren, d.h. die ASK-, DPSK- und FSK-Modulation geeignet, es ist jedoch ein zusätzlicher Aufwand an Elektronik nötig, um den Polarisationsumschalter anzusteuern. Des weiteren muß in einem Mehrkanalsystem für jeden optischen Sender ein Umschalter mit zugehöriger Ansteuerelektronik vorhanden sein.

Sei einem optischen Übertragungssystem für FSK-modulierte optische Sendesignale kann eine Polarisationsumschaltung auch durch dieses Signal selbst bewirkt werden. Hierzu muß es vor der eigentlichen Übertragung durch die Faser zunächst ein geeignetes doppelbrechendes Medium durchlaufen. In der Literatur wird hierfür die Verwendung einer polarisationserhaltenden Faser geeigneter Länge vorgeschlagen (siehe Electron. Lett. 25 (1989) S. 4-5). Wird das FSK-modulierte Signal unter 45° zu den Hauptachsen der Polarisationserhaltenden Faser in diese eingekoppelt, so erhält man am Faserausgang ein Signal mit zueinander orthogonalen Polarisationszuständen, die synchron zur Modulation umgeschaltet werden. Bei einem Frequenzhub von beispielsweise $\Delta f = 1$ GHz gegenüber der Grundfrequenz $f_0$ des modulierten optischen Signals und einer Faserdoppelbrechung von $B = 5.10^{-4}$ muß eine Faser von etwa 300 m Länge verwendet werden.

Als weitere Möglichkeit, ein FSK-Signal mit orthogonalen Polarisationszuständen zu erzeugen, wird in der Literatur die Verwendung eines Mach-Zehnder-Interferometers vorgeschlagen (siehe dazu IEEE J. Lightwave Technol. LT6 (1988) S. 1537-1548). Um bei gegebenem Frequenzhub $\Delta f$ des FSK-modulierten Sendesignals am Interferometerausgang zueinander orthogonale Polarisationszustände zu erzeugen, muß die optische Wegdifferenz $\Delta 1$ zwischen den Interferometerarmen gleich $c/2 \Delta f$ sein, wobei c die Lichtgeschwindigkeit bedeutet. Dieses Interferometer benötigt zwei Polarisationsstrahlteiler und seine Justage ist aufwendig.

Aufgabe der Erfindung ist es, eine Anordnung zum Erzeugen eines zwei zueinander orthogonale Polarisationszustände aufweisenden, FSK-modulierten optischen Signals aus einem FSK-modulierten Sendesignal zur Realisierung eines polarisationsunabhängigen optischen Überlagerungsempfangs für dieses Signal anzugeben, die nur einen Polarisationsstrahlteiler benötigt und in einem kompakten Aufbau herstellbar ist.

Diese Aufgabe wird durch eine Anordnung gelöst, welche die im Patentanspruch 1 angegebenen Merkmale aufweist.

Die erfindungsgemäße Anordnung basiert auf einem Michelson-Interferometer.

Ein großer Vorteil der erfindungsgemäßen Anordnung liegt darin, daß sie in einem Mehrkanalsystem für mehrere Kanäle gleichzeitig genutzt werden kann, sofern alle Kanäle den gleichen Frequenzhub $\Delta f$ aufweisen.

Bevorzugte und vorteilhafte Ausgestaltungen der erfindungsgemäßen Anordnungen gehen aus den Ansprüchen 2 bis 5 hervor.

Bevorzugte Ausführungsbeispiele der Erfindung werden anhand der Figuren in der nachfolgenden Beschreibung näher erläutert. Es zeigen:

Figur 1 den grundsätzlichen Aufbau einer erfindungsgemäßen Anordnung, bei welcher der Polarisationsstrahlteiler aus einer dielektrischen Vielfachschicht besteht,

Figuren 2 bis 6 verschiedene Ausführungsformen der Anordnung nach Figur 1,

Figur 7 den grundsätzlichen Aufbau einer erfindungsgemäßen Anordnung mit einem polarisationsselektiven optischen Richtkoppler als Polarisationsstrahlteiler, und

Figur 8 ein optisches Übertragungssystem für einen polarisationsunempfindlichen Überlagerungsempfang von FSK-modulierten optischen Sendesignalen mit einer erfindungsgemäßen Anordnung.

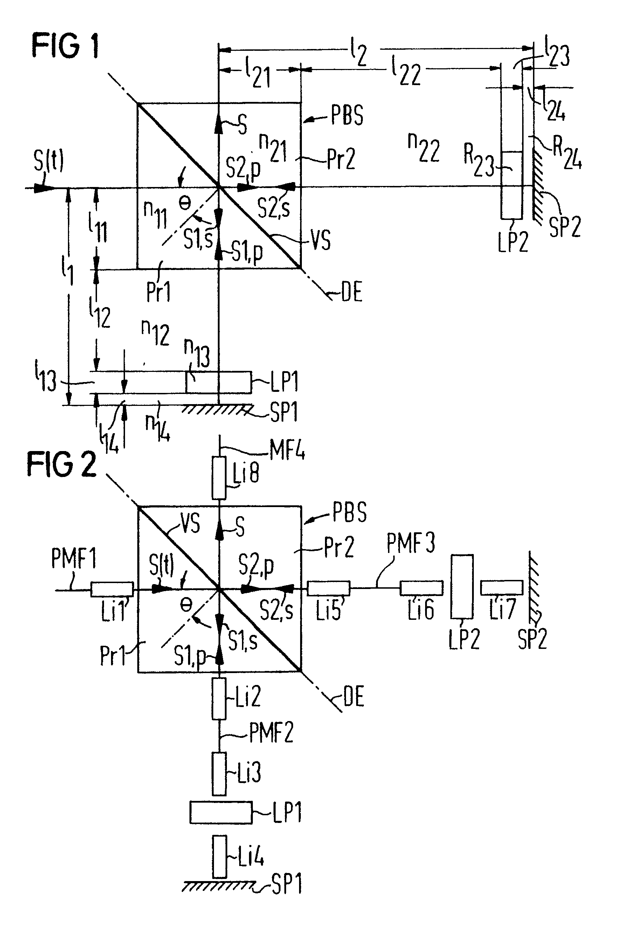

Bei den Ausführungsbeispielen nach den Figuren 1 bis 6 besteht der Polarisationsstrahlteiler PBS aus einer an sich bekannten, zwischen zwei Glasprismen Pr1 und Pr2 angeordneten dielektrischen Vielfachschicht VS. Die beiden Glasprismen Pr1 und Pr2 bilden beispielsweise zusammen einen Quader oder Würfel. Die Vielfachschicht VS ist in einer diagonalen Ebene DE dieses Quaders angeordnet, die in den Figuren 1 bis 6 beispielsweise auf der Zeichenebene senkrecht steht.

Das polarisierte optische Sendesignal S(t) ist dem Polarisationsstrahlteiler PBS beispielsweise horizontal von links zugeführt, dringt unabgelenkt in das Prisma Pr1 ein und trifft unter einem Einfallswinkel $\theta = 45°$ auf die Vielfachschicht VS. Dieses Sendesignal S(t) muß linear polarisiert sein und unter $45°$ zu den Hauptachsen des PBS eingekoppelt werden, damit die Lichtleistung gleichmäßig auf beiden Zweige verteilt wird.

Die zu der in den Figuren 1 bis 6 in der Zeichenebene liegenden Ebenfallsebene senkrechte Polarisationskomponente des z.B. linear polarisierten Sendesignals S(t) ist mit s, die zu dieser Einfallsebene parallele Polarisationskomponente mit p bezeichnet.

An der dielektrischen Vielfachschicht VS wird eine Signalkomponente S1 des Sendesignals S(t) vertikal nach unten reflektiert, welche beispielsweise entsprechend der Polarisationskomponente s polarisiert ist, während eine andere Signalkomponente S2, die entsprechend der Polarisationskomponente p polarisiert ist, durch diese Schicht VS hindurchgeht und sich danach unabgelenkt horizontal nach rechts ausbreitet.

Die reflektierte s-polarisierte Signalkomponente S1 trifft auf den dieser Komponente zugeordneten Reflektor SP1 und wird dort in sich zurückreflektiert. Dieser Signalanteil S1 durchdringt dabei ein Viertelwellenlängenplättchen LP1, das eine Drehung der ursprünglichen s-Polarisation dieses Signalanteils S1 in eine p-Polarisation bewirkt, so daß der zur dielektrischen Vielfachschicht in Richtung vertikal nach oben zurückkehrende Signalanteil S1 p-polarisiert ist, durch diese Vielfachschicht VS hindurchgeht und sich danach weiter in Richtung vertikal nach oben ausbreitet. Die p-polarisierte andere Signalkomponente S2 trifft auf den ihr zugeordneten Reflektor SP2 und wird dort in sich zurückreflektiert. Auch dieser Signalanteil S2 durchstrahlt dabei ein ihm zugeordnetes Viertelwellenlängenplättchen LP2 zweimal, das eine Drehung der ursprünglichen p-Polarisation dieses Signalanteils S2 in eine s-Polarisation bewirkt, so daß der in Richtung horizontal nach links zur Vielfachschicht VS zurücklaufende andere Signalanteil S2 s-polarisiert ist und dort vertikal nach oben reflektiert wird, wobei sich der durch die Vielfachschicht VS hindurchgegangene und p-polarisierte Signalanteil S1 und der dort reflektierte s-polarisierte andere Signalanteil S3 zu dem optischen Signal S überlagern, das die beiden zueinander orthogonalen Polarisationszustände s und p aufweist.

Die einander überlagerten Signalanteile S1 und S2 weisen eine gegenseitige zeitliche Verschiebung auf, die durch den doppelten Betrag $2|L2 - L1|$ einer Differenz zwischen der optischen Weglänge L2 zwischen dem Polarisationsstrahlteiler PBS und dem zugeordneten Reflektor SP2 und der optischen Weglänge L1 zwischen dem Polarisationsstrahlteiler PBS und dem zugeordneten Reflektor SF1 gegeben ist.

Der Betrag $|L2 - L1|$ ist gleich $c/4 \Delta f$ zu wählen, wobei c die Vakuumlichtgeschwindigkeit und $\Delta f$ den im FSK-modulierten Sendesignal S(t) enthaltenen optischen Frequenzhub bedeuten.

Beispielsweise kann das linear polarisierte FSK-modulierte optische Sendesignal S(t) ein Signal der Form

$$S(t) = A_0 . \cos(2\pi f_0 + \Delta f . d(t)) + \phi_0)$$

sein, wobei $A_0$ eine Signalamplitude, $f_0$ eine Grundfrequenz der optischen Welle, $\Delta f$ den genannten Frequenzhub, d(t) das digitale elektrische Datensignal und $\phi_0$ eine Phase bedeuten.

Die optische Weglänge L2 bzw. L1 zwischen dem Polarisationsstrahlteiler PBS und dem zugeordneten Reflektor SP2 bzw. SP1 ist allgemein definiert durch

$$L2 = \sum_{k=1}^{m} l_{2k} \cdot n_{2k}$$

$$L1 = \sum_{j=1}^{q} l_{1j} \cdot n_{1j}$$

wobei im ersten Fall m aufeinanderfolgende optische Medien mit jeweils einer zugeordneten geometrischen Länge $l_{2k}$ und zugeordneten Brechzahl $n_{2k}$ und im zweiten Fall q aufeinanderfolgende optische Medien mit jeweils einer zugeordneten geometrischen Länge $l_{1j}$ und zugeordneten Brechzahl $n_{1j}$ von der betreffenden Signalkomponente S2 bzw. S1 in einer Richtung durchlaufen werden.

Demnach gilt allgemein

$$c/4 \Delta f = \left| \left( \sum_{k=1}^{m} l_{2k} \cdot n_{2k} \right) - \left( \sum_{j=1}^{q} l_{1j} \cdot n_{1j} \right) \right| \cdot$$

Im Fall der Figur 1 gilt beispielsweise $m = q = 4$. Nimmt man des weiteren $n_{11} = n_{21}$, $n_{12} = n_{14} = n_{22} = n_{24} = n$ und $n_{13} = n_{23}$, sowie $l_{11} = L_{21}$, $l_{13} = l_{23}$ und $l_{14} = l_{24}$ an, dann muß
$|l_{22}-l_{12}|n = c/4 \Delta f$
gewählt werden. Dies ist gleichbedeutend mit
$|l_2-l_1| = c/n4 \Delta f$,
wobei

$$l_2 = \sum_{k=1}^{4} l_{2k} \quad \text{und} \quad l_1 = \sum_{j=1}^{4} l_{1j} \quad \text{ist.}$$

Bei $n = 1$, d.h. bei freier Strahlführung gilt dann $|l_2 - l_1| = c/4 \Delta f$.

Die Dicke der Viertelwellenlängenplättchen LP1 und LP2 ist jeweils durch die optische Grundfrequenz $f_0$ vorgegeben.

Das Ausführungsbeispiel nach Figur 2 unterscheidet sich vom Ausführungsbeispiel nach Figur 1 dadurch, daß das Sendesignal S(t) die Signalkomponenten S1 und S2 uno das optische Signal S außerhalb des Polarisationsstrahlteilers PBS in Monomodelichtleitfasern PMF1, PMF2, PMF3 bzw. PMF4 geführt werden, wobei die Fasern PMF1, PMF2 und PMF3 polarisationserhaltenoe Fasern sein müssen. Die Faser MF4 kann eine konventionelle Faser sein. Die Ein- und Auskopplung der optischen Wellen in bzw. aus den Fasern PMF1 bis PMF3 und MF4 erfolgt über Linsen Li1 bis Li8, die beispielsweise Gradientenlinsen oder Kugellinsen sein können.

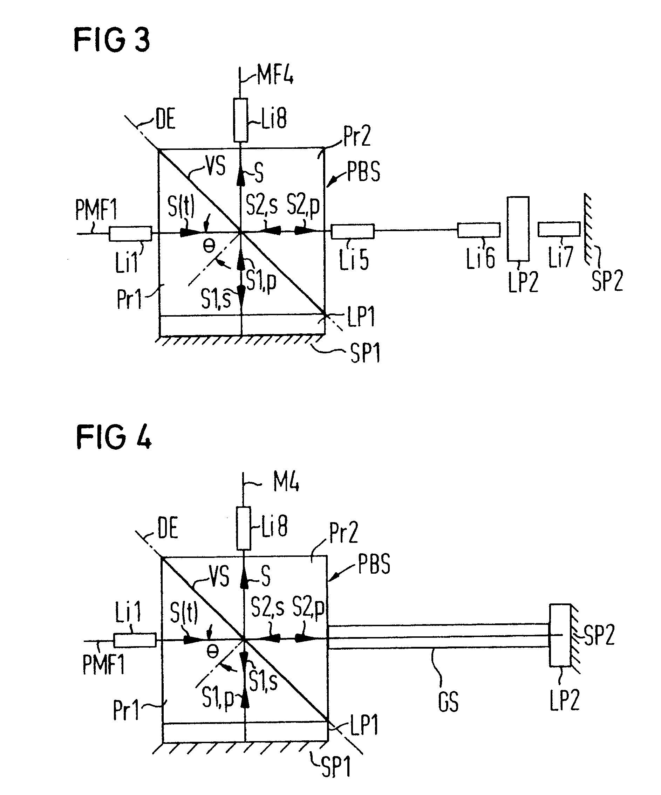

Das Ausführungsbeispiel nach Figur 3 unterscheidet sich vom Beispiel nach Figur 2 dadurch, daß beispielsweise auf die Faser PMF2 zwischen dem Polarisationsstrahlteiler PBS und dem Reflektor SP1 verzichtet ist und statt dessen ein einseitig verspiegeltes Viertelwellenlängenplättchen LP1 direkt auf das Prisma Pr1 gekittet ist. Ebensogut hätte auch auf die Faser PMF3 verzichtet werden können.

Das Ausführungsbeispiel nach Figur 4 unterscheidet sich von dem Beispiel nach Figur 3 dadurch, daß anstelle der Faser PMF3 zwischen dem Polarisationsstrahlteiler PBS und dem Reflektor SP2 ein Glasstab GS geeigneter Länge, beispielsweise ein Quarzglasstab, verwendet ist. Auf diesen Glasstab GS kann direkt ein einseitig verspiegeltes Viertelwellenlängenplättchen LP2 gekittet sein.

Zur Unterbindung von Reflexionen an Grenzflächen zwischen zwei Medien verschiedener Brechzahl können diese Grenzflächen entspiegelt sein. Des weiteren kann durch ein Verkippen des Polarisationsstrahlteilers PBS dafür gesorgt werden, daß eventuell noch vorhandene Restreflexionen nicht störend in Erscheinung treten.

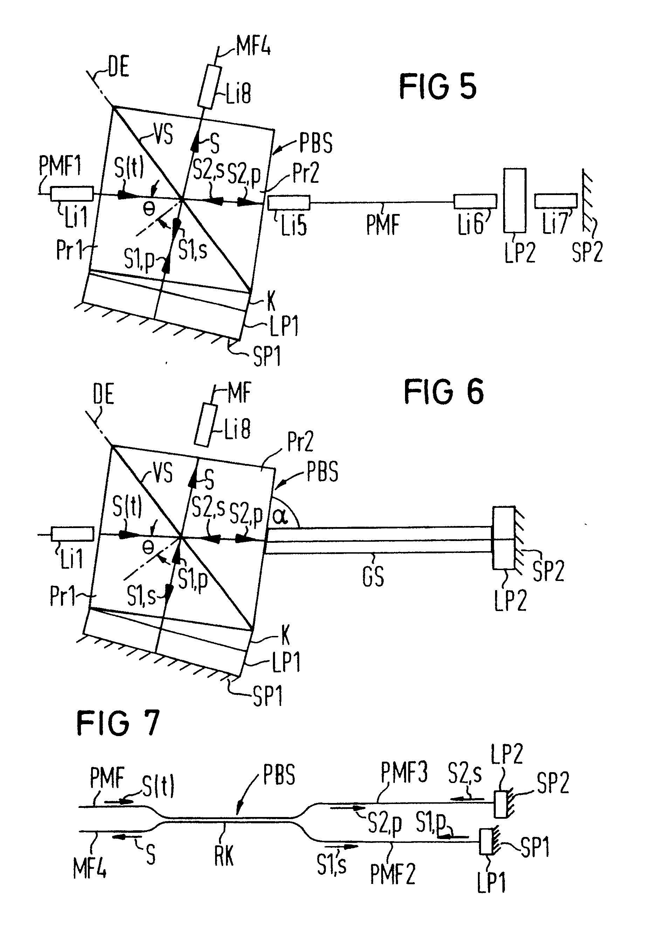

Ausführungsbeispiele mit einem solchen verkippten Polarisationsstrahlteiler PBS sind in den Figuren 5 und 6 dargestellt. Dabei entspricht das Ausführungsbeispiel nach Figur 5 dem Beispiel nach Figur 3 und das Beispiel nach Figur 6 dem Beispiel nach Figur 4. Der zwischen dem Polarisationsstrahlteiler PBS und dem Viertelwellenlängenplättchen LP1 angeordnete Keil K ist bei den Ausführungsbeispielen nach den Figuren 5 und 6 erforderlich und so zu bemessen, daß die Signalkomponente S1 senkrecht auf den Reflektor SP1 auftrifft und in sich zurückreflektiert werden kann. Dieser Keil K könnte auch zwischen dem Reflektor SP1 und dem Viertelwellenlängenplättchen LP1 angeordnet sein, wobei ein einseitig verspiegelter Keil K verwendet werden könnte.

Bei dem Ausführungsbeispiel nach Figur 6 ist der Winkel zwischen dem Glasstab GS und dem Polarisationsstrahlteiler PBS so auszulegen, daß die Signalkomponente S2 senkrecht auf den Reflektor SP2 auftrifft und so in sich zurückreflektiert wird.

Bei den Ausführungsbeispielen nach Figur 5 und 6 ist der Einfallswinkel $\theta$ kleiner als 45°.

Beim Ausführungsbeispiel nach Figur 7, das dem Beispiel nach Figur 2 entspricht, besteht der Polarisationsstrahlteiler PBS aus einem polarisationsselektiven optischen Richtkoppler RK, der beispielsweise ein integriert optischer Richtkoppler oder ein Faserrichtkoppler sein kann. Derartige Richtkoppler sind bekannt.

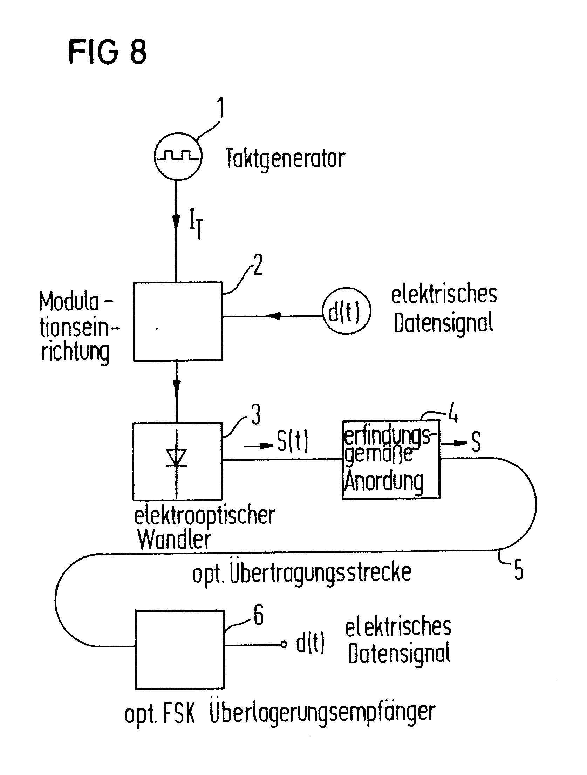

Das in Figur 8 dargestellte optische Übertragungssystem für einen polarisationsunempfindlichen Heterodynempfang von FSK-modulierten optischen Sendesignalen mit erfindungsgemäßer Anordnung besteht aus einem Taktgenerator 1 zur Erzeugung elektrischer Taktimpulse $I_T$ mit der Taktperiode $T_B$, die ebenso wie das elektrische Datensignal d(t) einer Modulationseinrichtung 2 zugeführt werden. Das am Ausgang der Modulationseinrichtung 2 entstehende elektrische Signal wird einem elektrooptischen Wandler 3, beispielsweise eine Laserdiode, zugeführt, welcher dieses elektrische Signal in ein optisches, beispielsweise linear polarisiertes FSK-moduliertes Sendesignal S(t) umwandelt. Dieses Sendesignal S(t) wird der erfindungsgemäßen Anordnung 4 zugeführt, die beispielsweise entsprechend einem der vorstehend beschriebenen Ausführungsbeispiele nach den Figuren 1 bis 7 ausgebildet sein kann. An einem Ausgang dieser Anordnung 4 wird ein FSK-moduliertes optisches Signal S mit zueinander orthogonalen Polarisationszuständen abgegeben, das über eine optische Übertragungsstrecke 5 einem FSK-Überlagerungsempfänger 6 zugeführt wird, an dessen Ausgang das elektrische Datensignal d(t) abgegriffen werden kann. Dieses Datensignal d(t) ist aufgrund der Anordnung 4 polarisationsunabhängig.

## Ansprüche

1. Anordnung zum Erzeugen eines zwei zueinander orthogonale Polarisationszustände (s, p) aufweisenden, FSK-modulierten optischen Signals (S) aus einem FSK-modulierten optischen Sendesignal (S(t)), zur Realisierung eines polarisationsabhängigen optischen Überlagerungsempfangs des Sendesignals (S(t)), mit einem Polarisationsstrahlteiler (PBS), der das Sendesignal (S(t)) in zwei orthogonal zueinander polarisierte Signalkomponenten (S1, S2) aufteilt, von denen jede von einem zugeordneten Reflektor (SP1, SP2) in sich zum Polarisationsstrahlteiler (PBS) zurückreflektiert wird, wobei jeder Signalkomponente (S1, S2) eine Polarisationsänderungseinrichtung zugeordnet ist, die den ursprünglichen Polarisationszustand (s oder p) der betreffenden Signalkomponente (S1 oder S2) in einen dazu orthogonalen Polarisationszustand (p oder s) überführt, wobei die optische Weglänge zwischen dem Polarisationsstrahlteiler (PBS) und dem der einen Signalkomponente (S1) zugeordneten Reflektor (SP1) und die optische Weglänge zwischen dem Polarisationsstrahlteiler (PBS) und dem der anderen Signalkomponente (S2) zugeordneten Reflektor (SP2) derart verschieden voneinander gewählt sind, daß der Betrag einer Differenz zwischen diesen Weglängen gleich $c/4 \Delta f$ ist, wobei c die Lichtgeschwindigkeit und $\Delta f$ einen im FSK-modulierten Sendesignal (S(t)) enthaltenen optischen Frequenzhub bedeuten.

2. Anordnung nach Anspruch 1, **dadurch gekennzeichnet,** daß der Polarisationsstrahlteiler (PBS) eine dielektrische Vielfachschicht (VS) aufweist.

3. Anordnung nach Anspruch 1, **dadurch gekennzeichnet,** daß der Polarisationsstrahlteiler (PBS) aus einem polarisationsselektiven optischen Richtkoppler (RK) besteht.

4. Anordnung nach einem der vorhergehenden Ansprüche, **dadurch gekennzeichnet,** daß eine Polarisationsänderungseinrichtung (LP1, LP2) aus einem von der zugeordneten Signalkomponente (S1, S2) durchstrahlten Viertelwellenlängenplättchen besteht.

EP 0 415 224 A2

FIG 1

FIG 2

**FIG 3**

**FIG 4**

FIG 5

FIG 6

FIG 7

# FIG 8